# EUROPÄISCHE PATENTSCHRIFT

(11) **EP 4 270 863 B1**
(45) Veröffentlichungstag und Bekanntmachung des Hinweises auf die Patenterteilung: **01.05.2024**
(21) Anmeldenummer: 23168738.5
(22) Anmeldetag: 19.04.2023
(51) Int. Cl.: H04L 9/08

(54) **SICHERE WIEDERHERSTELLUNG PRIVATER SCHLÜSSEL**
SECURE RECONSTRUCTION OF PRIVATE KEYS
RECONSTRUCTION SÉCURISÉE DE CLÉS PRIVÉES

(30) Priorität: 27.04.2022 DE 102022110139
(43) Veröffentlichungstag der Anmeldung: 01.11.2023
(73) Patentinhaber: Die Unternehmensgefährten GmbH, 28195 Bremen (DE)
(72) Erfinder: London, Nick, Bremen (DE); London, Patrick, Bremen (DE)
(74) Vertreter: Manasse, Uwe

(56) Entgegenhaltungen:
- EP-A1- 3 146 750
- US-A1- 2022 123 921
- US-B1- 10 819 522

## Beschreibung

### TECHNISCHES GEBIET

Die hier offenbarte Erfindung liegt auf dem Gebiet computerimplementierter Verschlüsselungstechniken.

### HINTERGRUND

Die Kryptographie befasst sich mit der sicheren Verschlüsselung von Daten und findet auf zahlreichen Gebieten der Technik Anwendung, insbesondere auf dem Gebiet der Nachrichtenübertragung und zahlreichen weiteren computerimplementierten Mechanismen. Grundsätzlich finden kryptographische Verfahren auf jede digital darstellbare Datenform Anwendung.

In der Kryptographie wird zwischen symmetrischen und asymmetrischen Schlüsseln unterschieden. Bei der symmetrischen Verschlüsselung wird der gleiche Schlüssel verwendet, um Daten - eine Datei oder einen Stream - zu verschlüsseln, während zur asymmetrischen Verschlüsselung ein Schlüsselpaar bestehend aus einem privaten Schlüssel (private key) und einem öffentlichen Schlüssel (public key) verwendet wird. Der öffentliche Schlüssel wird ausschließlich zum Verschlüsseln verwendet, der private Schlüssel zum Entschlüsseln. Der öffentliche Schlüssel kann daher allgemein verfügbar gemacht werden, um Anderen die Verschlüsselung von Daten für einen Empfänger, also den Besitzer des privaten Schlüssels, zu ermöglichen. Der private Schlüssel ist von seinem Besitzer vor dem Zugriff durch Andere zu schützen. Der private Schlüssel kann darüber hinaus zum Signieren von Daten verwendet werden. Durch das Signieren werden die Daten nicht verschlüsselt; jedoch kann ein Empfänger solcher Daten anhand des zugehörigen öffentlichen Schlüssels prüfen, ob die Signatur gültig ist - wurden die Daten nach dem Signieren verändert, ist die Signatur nicht mehr gültig.

Ein symmetrischer Schlüssel muss in der Regel zwischen kommunizierenden Parteien vorab übermittelt werden, um einerseits das Verschlüsseln und andererseits das Entschlüsseln zu ermöglichen. Diese Übermittlung stellt ein Risiko für die Parteien dar, weil der Schlüssel vor Dritten geheim gehalten werden muss und bei der Übermittlung unbemerkt kopiert werden kann. Dieser Nachteil entfällt für asymmetrische Schlüssel, da der private Schlüssel nicht weitergegeben wird und der öffentliche Schlüssel allgemein bekannt sein kann.

Um einem Zugriff auf den privaten Schlüssel durch Dritte vorzubeugen, kann dieser seinerseits durch einen symmetrischen Schlüssel - beispielsweise ein Passwort - oder einen weiteren asymmetrischen Schlüssel geschützt werden. Sollte der weitere Schlüssel jedoch verloren gehen - beispielsweise durch Vergessen des Passworts - ist der ursprüngliche private Schlüssel nach aktuellem Stand der Technik nicht wiederherstellbar, wodurch zum Beispiel der Zugriff auf relevante Dokumente oder die Fähigkeit sich auszuweisen oder Dokumente zu signieren für den Anwender erlischt.

Um einen privaten Schlüssel vor einem unbefugten Zugriff zu schützen, kann dieser an einen Dritten zur Aufbewahrung übertragen werden. Wird der Schlüssel unverschlüsselt übermittelt, kann der Dritte Dokumente im Namen des Schlüsselinhabers signieren oder Daten, die an den Schlüsselinhaber verschlüsselt wurden, zu entschlüsseln. Erfolgt die Übertragung wie oben beschrieben mit einem weiteren Passwort beziehungsweise Schlüssel, so besteht weiterhin das Problem, dass der Schlüssel bei Verlust nicht wiederhergestellt werden kann.

Eine unverschlüsselte Speicherung privater Schlüssel, insbesondere bei Dritten, ist mit elementaren Risiken verbunden. Andererseits ist eine passwortgestützte Sicherung ebendieser privaten Schlüssel vor dem Hintergrund des Verlustrisikos mit ebenso großen Risiken verbunden.

Der hier offenbarten Erfindung liegt die Aufgabe zugrunde, private asymmetrische Schlüssel gegen derartigen Verlust bei Vermeidung oben genannter Risiken abzusichern.

### ZUSAMMENFASSUNG

Ausführungsformen der Erfindung betreffen Verfahren zum Sichern eines privaten Schlüssels eines ersten Clients, umfassend: Durch den ersten Client Anfordern eines öffentlichen Schlüssels eines ersten Servers; durch den ersten Client Erzeugen eines symmetrischen Schlüssels aus dem privaten Schlüssel des ersten Clients und dem öffentlichen Schlüssel des ersten Servers, Verschlüsseln des privaten Schlüssels des ersten Clients mit dem symmetrischen Schlüssel, und Übermitteln des verschlüsselten privaten Schlüssels des ersten Clients an einen zweiten Server; und durch den zweiten Server Speichern des verschlüsselten privaten Schlüssels des ersten Clients.

Weitere Ausführungsformen der Erfindung betreffen Systeme zum Sichern eines privaten Schlüssels eines ersten Clients, umfassend: Einen Client, einen ersten Server und einen zweiten Server; wobei der Client eingerichtet ist zum Anfordern eines öffentlichen Schlüssels des ersten Servers; wobei der erste Server eingerichtet ist zum Übermitteln des öffentlichen Schlüssels des ersten Servers an den Client; wobei der Client ferner eingerichtet ist zum Erzeugen eines symmetrischen Schlüssels aus dem privaten Schlüssel des Clients und dem öffentlichen Schlüssel des ersten Servers, und zum Verschlüsseln des privaten Schlüssels des Clients mit dem symmetrischen Schlüssel, und zum Übermitteln des verschlüsselten privaten Schlüssels des Clients an einen zweiten Server; und wobei der zweite Server eingerichtet ist zum Speichern des verschlüsselten privaten Schlüssels des Clients.

Ausführungsformen der Erfindung betreffen außerdem computerlesbare Medien mit darauf gespeicherten Befehlen, die, wenn sie durch einen oder mehrere Prozessoren ausgeführt werden, eines der vorgenannten Verfahren durchführen.

Weitere Ausführungsformen der Erfindung sind aus den beigefügten Ansprüchen ersichtlich.

### KURZE BESCHREIBUNG DER ZEICHNUNGEN

Figur 1 zeigt ein erfindungsgemäßes Verfahren zum Sichern eines privaten Schlüssels eines Clients.
Figur 2 zeigt ein erfindungsgemäßes Verfahren zum Wiederherstellen eines privaten Schlüssels eines Clients.
Figur 3 zeigt ein erfindungsgemäßes Verfahren zum Ersetzen eines privaten Schlüssels eines Clients.
Figur 4A zeigt ein erfindungsgemäßes Verfahren zum Anwenden eines Passworts auf einen privaten Schlüssel eines Clients.
Figur 4B zeigt ein erfindungsgemäßes Verfahren zum Wiederherstellen eines privaten Schlüssels eines Clients mittels eines Passworts.
Figur 4C zeigt ein erfindungsgemäßes Verfahren zum Ersetzen eines Passworts.
Figur 5 zeigt ein erfindungsgemäßes Verfahren zum Authentifizieren eines Clients mittels eines Servers.
Figur 6 zeigt ein erfindungsgemäßes Verfahren zum Authentifizieren eines Clients mittels eines weiteren Servers.
Figur 7 zeigt ein erfindungsgemäßes Verfahren zum Authentifizieren eines Clients, basierend auf einem der in Figur 5 und Figur 6 gezeigten Verfahren.
Figur 8 zeigt ein erfindungsgemäßes Verfahren zum Zugreifen auf einen privaten Schlüssel eines Clients.

### AUSFÜHRLICHE BESCHREIBUNG

Die hier beschriebenen Verfahren werden vorzugsweise durch einen oder mehrere Clients und/oder einen oder mehrere Server ausgeführt. Ein Client ist beispielsweise ein Mobilgerät - Smartphone, Notebook oder dergleichen - oder auch ein stationärer Computer. Analog kann auch ein Server ein mobiler oder stationärer Computer sein. Alternativ können Clients und/oder Server jedoch auch als Software-Prozesse ausgestaltet sein, die auf unterschiedlichen Computern oder auch auf dem gleichen Computer ablaufen. Ein Client kann außerdem einfach ein Benutzer sein, der mittels einer Software die hier offenbarten Schritte eines Clients ausführt.

Der oder die Clients kommunizieren mit einem ersten Server und einem zweiten Server, die technisch voneinander getrennt sind und nicht miteinander kommunizieren und auf Daten des jeweils anderen zugreifen können. Eine solche Trennung kann beispielsweise implementiert werden durch Serverprozesse, die auf unterschiedlichen Maschinen ablaufen, wobei die Maschinen über keinerlei physischen Kontakt zueinander verfügen und etwa auch nicht in der Lage sind, mittels einer Netzwerkverbindung oder über andere Einrichtungen miteinander zu kommunizieren.

Alternativ kann die Trennung der beiden Server dadurch erreicht werden, dass die Server in zwei Netzwerken betrieben werden, wobei eine Kontaktaufnahme von einem der beiden Netzwerke durch das jeweils andere Netzwerk immer abgelehnt wird, beispielsweise durch Verwendung einer Netzwerk-Firewall.

Eine weitere Alternative umfasst den Betrieb der Server in physisch getrennten Netzwerken, sodass ein direkter Informationsaustausch physisch ausgeschlossen ist. Zum Beispiel kann der erste Server über das Internet erreichbar sein, der zweite Server jedoch Teil eines nicht über das Internet erreichbaren Campusnetzes oder lokalen Netzwerks sein.

Eine weitere Alternative umfasst, dass die beiden Server innerhalb desselben Netzwerks betrieben werden, die Server aber so konfiguriert werden, dass sie Verbindungen des jeweils anderen Servers immer ablehnen, beispielsweise durch Verwendung einer System-Level-Firewall oder einer Application-Firewall.

Ein direkter Kontakt zwischen dem zweiten Server und dem ersten Server kann trotz der beschriebenen Trennung der Server ermöglicht werden, unterliegt jedoch einer strengen Beschränkung, da beide Parteien bei Anwendung der hier offenbarten Ausführungsformen über Daten verfügen, die die jeweils andere Partei im Regelfall nicht erhalten darf: hierzu zählt der private Schlüssel des ersten Servers beziehungsweise der mit dem symmetrischen Schlüssel verschlüsselte private Schlüssel des Clients. Diese Beschränkung kann durch unterschiedliche Ansätze implementiert sein. Ein erster Ansatz umfasst die Notwendigkeit, die beiden Server physisch und vorübergehend miteinander zu verbinden, beispielsweise indem ein Benutzer aufgefordert wird, eine direkte drahtgebundene Verbindung oder andere Hardware-Schnittstelle einzurichten. Ein zweiter Ansatz umfasst, jeglichen Zugriff zwischen beiden Servern nur dann zuzulassen, wenn diese innerhalb einer maximalen Entfernung voneinander beabstandet sind, beispielsweise unterhalb Im oder innerhalb eines konfigurierbaren Abstands. Ein dritter Ansatz umfasst, beide Server so zu konfigurieren, dass sie für die Dauer einer Verbindung zwischen beiden Servern automatisch alle weiteren Verbindungen abschalten, also beispielsweise lediglich über eine serielle Schnittstelle kommunizieren und ihre Netzwerk-Stacks abschalten. Die Server können so konfiguriert sein, dass sie nur entweder eine Verbindung zueinander oder eine Verbindung zu anderen Adressen oder Parteien aufbauen können. Die Ansätze können miteinander kombiniert und/oder durch weitere Authentifizierungsmaßnahmen ergänzt werden.

Ein weiterer Ansatz, um den Kontakt zwischen beiden Servern einzuschränken, kann über die Implementierung eines weiteren Servers erfolgen, beispielsweise einem sogenannten Jumphost. Dieser Server ist so konfiguriert, dass er sowohl mit dem ersten Server als auch mit dem zweiten Server kommunizieren kann. Der erste Server und der zweite Server sind bei diesem Ansatz so konfiguriert, dass sie den weiteren Server erkennen und Verbindungen von diesem entgegennehmen. Die Erkennung des weiteren Servers durch den ersten Server und den zweiten Server kann durch die Erkennung von Netzwerkadressen und/oder durch technische Identifikations- und/oder Authentifikationsverfahren erfolgen. Der weitere Server dient als Paketfilter zwischen dem ersten Server und dem zweiten Server und stellt sicher, dass ausschließlich diejenige Kommunikation zwischen dem ersten Server und dem zweiten Server möglich ist, die im Rahmen der beschrieben Verfahren zwischen dem ersten Server und dem zweiten Server vorgesehen sind. Die Filterung der Pakete kann beispielsweise mittels Deep Packet Inspection erfolgen. Eine Variante des weiteren Servers umfasst die Umsetzung dieses Servers als sogenannter Jump-Host als Teil einer demilitarisierten Zone; dies kann mit dem oben beschriebenen ersten oder zweiten Ansatz kombiniert werden. Eine andere Variante umfasst die Verwendung von mindestens zwei Servern, die mit einer oder mehreren Datendioden miteinander verbunden sind; dies kann mit sämtlichen beschriebenen Ansätzen kombiniert werden.

Die beschriebenen Möglichkeiten, die Kommunikation zwischen Servern einzuschränken und lediglich unter bestimmten Vorkehrungen zuzulassen, können mit allen unten beschriebenen Ausführungsformen kombiniert werden, ohne dass dies jedes Mal ausdrücklich erwähnt wird.

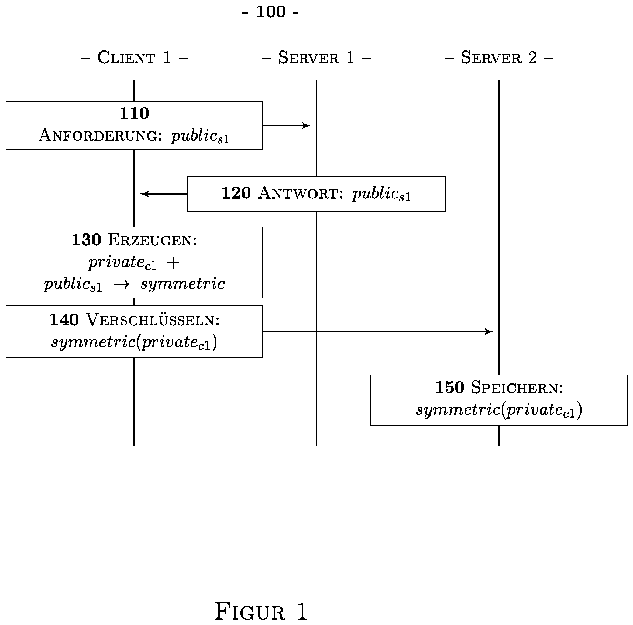

Figur 1 zeigt ein Verfahren 100 zum Sichern eines privaten Schlüssels eines Clients (*Client 1*)*.* Zu diesem Zweck kommuniziert der Client separat mit einem ersten Server (*Server* 1) und einem zweiten Server (*Server 2*)*.*

In Schritt 110 fordert der Client einen öffentlichen Schlüssel (*publicₛ₁*) des ersten Servers an. Dies kann, wie in Figur 1 gezeigt, durch eine direkt an den ersten Server versendete Anforderung unter Verwendung eines geeigneten Protokolls erfolgen, beispielsweise mittels HTTPS/TLS/SSL oder anderer Netzwerkprotokolle. Alternativ kann der Client den öffentlichen Schlüssel des ersten Servers jedoch auch aus anderen Quellen anfordern, beispielsweise von einer Zertifizierungsstelle (*certificate authority, CA*)*,* im Rahmen einer Public-Key-Infrastruktur (*public key infrastructure, PKI*)*,* die öffentliche Schlüssel verwaltet und zertifiziert, um Dritten den Zugriff auf und/oder die Prüfung eines öffentlichen Schlüssels zu ermöglichen. In Schritt 120 übermittelt der erste Server als Antwort auf die Anforderung seinen öffentlichen Schlüssel. Auch dieser Schritt kann alternativ durch eine Zertifizierungsstelle vorgenommen werden. Als weitere Alternative kann die Anforderung und auch die Antwort wie gezeigt durchgeführt werden, wobei der erste Server seinen öffentlichen Schlüssel selbst von einer Zertifizierungsstelle abruft. Als weitere Alternative kann der erste Server als Reaktion auf die Anforderung prüfen, ob er bereits einen öffentlichen Schlüssel besitzt, und kann, falls dies nicht der Fall ist, ein neues asymmetrisches Schlüsselpaar erzeugen und dem Client einen öffentlichen Schlüssel dieses Schlüsselpaares übermitteln.

In einer besonderen Ausführungsform kann der erste Server für unterschiedliche Clients einen jeweiligen öffentlichen Schlüssel bereithalten. Bei dieser Ausführungsform übermittelt der Client mit seiner Anforderung in Schritt 110 einen Bezeichner dieses Clients. Auf der Serverseite wird dieser Bezeichner verwendet, um den entsprechenden öffentlichen Schlüssel nachzuschlagen, oder um ein neues asymmetrisches Schlüsselpaar für diesen Client zu erzeugen und mit dem Bezeichner zu speichern.

In Schritt 130 erzeugt der Client aus dem öffentlichen Schlüssel des ersten Servers (*publicₛ₁*) und aus einem privaten Schlüssel des Clients (*private_{c1}*) einen symmetrischen Schlüssel (*symmetric*)*.* Dies umfasst beispielsweise die Verwendung einer Schlüsselableitungsfunktion (*key derivation function, KDF*)*.* Eine solche KDF kann die Eigenschaft haben, dass sie aus dem öffentlichen Schlüssel eines ersten Schlüsselpaares und dem privaten Schlüssel eines zweiten Schlüsselpaares das gleiche Ergebnis erzeugt wie aus dem privaten Schlüssel des ersten Schlüsselpaares und dem öffentlichen Schlüssel des zweiten Schlüsselpaares.

In einer Ausführungsform kann Schritt 130 zusätzlich umfassen, dass mittels einer pseudozufälligen Funktion (*oblivious pseudo-random function, OPRF*) der symmetrische Schlüssel zusätzlich von einer auf einem weiteren Server gespeicherten Information abhängig gemacht wird. Hierzu maskiert der Client den symmetrischen Schlüssel mittels einer einmalig verwendeten Zufallszahl und übermittelt das Ergebnis an den weiteren Server. Der weitere Server führt eine Operation mittels der auf dem weiteren Server gespeicherten Information und dem übermittelten maskierten Schlüssel durch und sendet das Ergebnis wieder an den Client. Der Client demaskiert die Antwort des weiteren Servers mittels der einmalig verwendeten Zufallszahl. Die Maskierungsoperation, sowie die Serveroperation ist so eingerichtet, dass das Ergebnis unabhängig von der verwendeten Zufallszahl stehts dasselbe ist. Ein Beispiel für solch eine OPRF ist Blind RSA Signature. Dieses Verfahren kann mit beliebig vielen weiteren Servern wiederholt werden. Einer der weiteren Server kann der zweite Server sein. Wird diese Ausführungsform verwendet, wird in den folgenden Schritten das Ergebnis der OPRF als *symmetric* verwendet. Diese Ausführungsform kann mit allen unten beschrieben Ausführungsformen kombiniert werden, ohne dass dies jedes Mal ausdrücklich erwähnt wird.

Dies betrifft insbesondere die Schritte 240, 350, 497, 760 und 830 der unten beschriebenen Verfahren. Die einzige Voraussetzung ist, dass der Client nach Erhalt (Schritte 240, 350, 760 und 830) oder Entschlüsselung (Schritt 497) des symmetrischen Schlüssels jedes Mal die OPRF-Funktion durchführt.

In Schritt 140 verschlüsselt der Client seinen privaten Schlüssel mit dem symmetrischen Schlüssel; das Ergebnis dieser Verschlüsselung wird hier als *symmetric(private_{c1})* bezeichnet, und wird an den zweiten Server übermittelt mit der Maßgabe (*Request*), dieses zu speichern. Ein solcher Request oder eine solche Anforderung kann zusätzlich einen Bezeichner des Clients enthalten, wie beispielsweise den bereits beschriebenen Bezeichner des Clients, um den zweiten Server in die Lage zu versetzen, den verschlüsselten privaten Schlüssel des Clients unter diesem Bezeichner zu speichern und ihn später anhand des Bezeichners nachschlagen zu können. Alternativ kann der zweite Server selbst einen Bezeichner für den Client erzeugen, beispielsweise anhand einer Adresse, von der aus der Zugriff des Clients auf den zweiten Server erfolgt. Als weitere Alternative kann für diesen Zugriff oder Request eine Authentifizierung des Clients umfassen, die die Angabe eines Bezeichners und eines Passworts erfordert; bei dieser Alternative kann der übermittelte verschlüsselte private Schlüssel einfach unter einem Benutzerkonto bei dem zweiten Server gespeichert werden. Der zweite Server speichert den verschlüsselten privaten Schlüssel in Schritt 150.

Abschließend löscht der Client den symmetrischen Schlüssel. Vorzugsweise kann das Verfahren 100 einen weiteren Schritt umfassen, in dem der Client auch den verschlüsselten privaten Schlüssel des Clients löscht.

Das Verfahren 100 stellt einen sicheren Ansatz dar, um einen privaten Schlüssel eines Clients zu speichern. Der erste Server verfügt nach Anwendung des Verfahrens 100 lediglich über seinen eigenen privaten und öffentlichen Schlüssel und ist nicht in der Lage, aus diesen den symmetrischen Schlüssel zu erzeugen, der erforderlich ist, um den verschlüsselten privaten Schlüssel des Clients zu entschlüsseln. Zudem besteht, wie erläutert, keine Möglichkeit für den ersten Server, den verschlüsselten privaten Schlüssel des Clients von dem ersten Server abzurufen. Auch der zweite Server verfügt über keine Möglichkeit, auf den privaten Schlüssel des Clients zuzugreifen. Zwar liegt dieser Schlüssel in verschlüsselter Form auf dem zweiten Server. Jedoch ist zu dessen Entschlüsselung entweder der symmetrische Schlüssel oder aber der private Schlüssel des Clients und der öffentliche Schlüssel des ersten Servers oder der öffentliche Schlüssel des Clients und der private Schlüssel des ersten Servers erforderlich, wie noch gezeigt wird. Auf die für die Entschlüsselung des verschlüsselten privaten Schlüssels des Clients erforderlichen Daten hat der zweite Server keinen Zugriff.

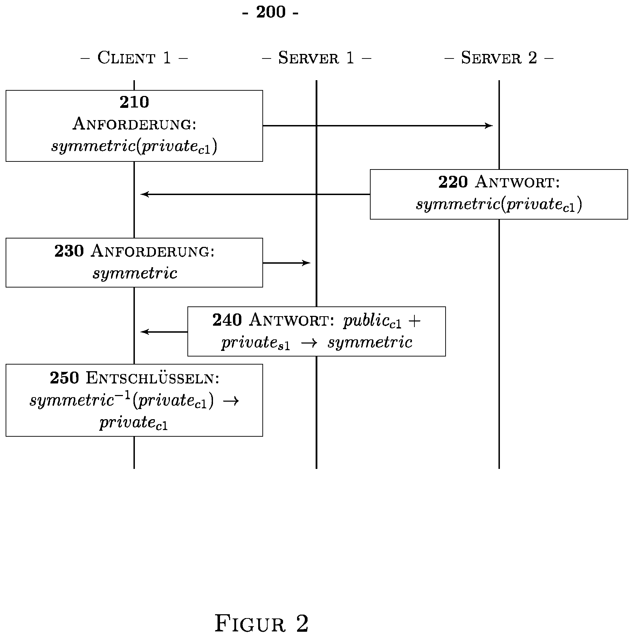

Figur 2 zeigt ein Verfahren 200 zur Wiederherstellung des privaten Schlüssels des Clients, nachdem dieser Schlüssel, wie im Hinblick auf Figur 1 erläutert, auf dem zweiten Server abgelegt wurde.

In Schritt 210 sendet der Client eine Anforderung an den zweiten Server, um den verschlüsselten privaten Schlüssel des Clients zu erhalten. Das Senden dieser Anforderung kann die Übermittlung eines Bezeichners und/oder Passworts oder andere Authentifizierungsmaßnahmen umfassen. Auf diese Weise kann der zweite Server die Identität des Clients prüfen und/oder den verschlüsselten privaten Schlüssel des Clients unter mehreren solchen Schlüsseln identifizieren, nämlich beispielsweise anhand des übermittelten Bezeichners. Jedoch ist auch eine Identifizierung des Clients auf anderem Wege möglich, wie etwa anhand dessen Adresse oder anderer üblicher Authentifikationsmechanismen.

In Schritt 220 antwortet der zweite Server mit einer Übermittlung des angeforderten verschlüsselten privaten Schlüssels des Clients.

In Schritt 230 fordert der Client den symmetrischen Schlüssel von dem ersten Server an. Dies kann in der in Figur 2 gezeigten Reihenfolge vorgenommen werden. Insbesondere kann der Client Schritt 230 lediglich dann durchführen, wenn die Schritte 210 und 220 erfolgreich waren.

Alternativ kann der Client Schritt 230 noch vor Schritt 210 durchführen oder auch zwischen den Schritten 210 und 220, oder allgemein unabhängig von den Schritten 210 und 220.

In Schritt 240 antwortet der erste Server auf die Anforderung des Clients. Dies umfasst das Erzeugen des symmetrischen Schlüssels aus dem öffentlichen Schlüssel des Clients und dem privaten Schlüssel des ersten Servers. Die Möglichkeit, aus dem privaten Schlüssel eines ersten Schlüsselpaares und dem öffentlichen Schlüssel eines zweiten Schlüsselpaares einen symmetrischen Schlüssel zu erzeugen, der identisch ist mit einem symmetrischen Schlüssel, der aus dem öffentlichen Schlüssel des ersten Schlüsselpaares und dem privaten Schlüssel des zweiten Schlüsselpaares erzeugt wird, wird durch die KDF gewährleistet. Beispiele für eine entsprechende Implementierung sind Diffie-Hellman-Schlüsselaustausch (*Diffie Hellman key exchange*), Menezes-Qu-Vanstone (MQV) oder Hash MQV (HMQV). Als Alternative zu Schritt 240 kann der erste Server den symmetrischen Key bereits vorab erzeugt und/oder gespeichert haben und ruft diesen lediglich ab. Anschließend übermittelt der erste Server den symmetrischen Schlüssel an den Client. In bestimmten Ausführungsformen kann der Client mit seiner Anforderung einen Bezeichner des Clients übermitteln, den der erste Server zum Nachschlagen oder Speichern des symmetrischen Schlüssels verwendet.

In Schritt 250 entschlüsselt der Client den verschlüsselten privaten Schlüssel des Clients mittels des symmetrischen Schlüssels; das Ergebnis dieses Vorgangs ist in Figur 2 gezeigt als *symmetric⁻¹(private_{c1})→private_{c1}.*

In einer Ausführungsform können die Anforderungen der Schritte 210 und 230 und deren Antworten in den Schritten 220 und 240 der Verwendung eines oder mehrerer Einmalpasswörter unterliegen, die durch die jeweiligen Server erzeugt und auf einem vorab vereinbarten Weg an den Client übermittelt werden, beispielsweise über ein voreingestelltes weiteres Gerät eines Benutzers des Clients.

Im Ergebnis ermöglicht das Verfahren 200 dem Client den Zugriff auf seinen privaten Schlüssel für den Fall, dass dieser verlorenging oder von vornherein nach seiner Verwendung gelöscht wurde. Da hierzu Daten von zwei verschiedenen Parteien - erster und zweiter Server - benötigt werden, die jede für sich nicht ausreichen, um den privaten Schlüssel zu entschlüsseln, ermöglicht das Verfahren eine sichere Wiederherstellung eines privaten Schlüssels.

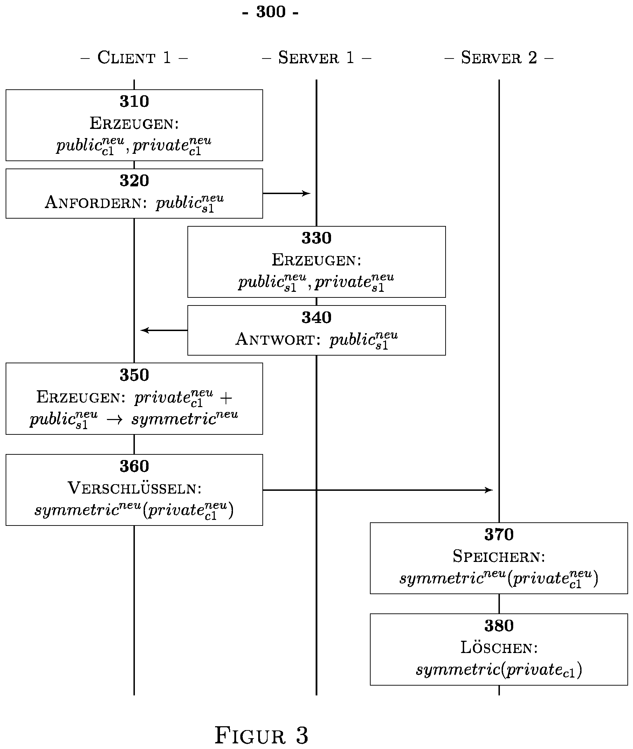

Figur 3 zeigt ein Verfahren 300 zum Ersetzen/Erneuern eines privaten Schlüssels eines Clients. Das Verfahren 300 kann in Folge eines der zuvor beschriebenen Verfahren durchgeführt werden mit dem Ziel, über einen bestimmten Zeitraum verwendete Schlüssel zu ersetzen.

In Schritt 310 erzeugt der Client ein neues asymmetrisches Schlüsselpaar, dessen privater Schlüssel hier als *private_{c1}^{neu}* bezeichnet, und dessen öffentlicher Schlüssel als *public_{c1}^{neu}* bezeichnet wird. Das Erzeugen dieser Schlüssel kann umfassen, das Schlüsselpaar in einer PKI anzumelden, so dass der neue öffentliche Schlüssel durch Dritte abgerufen und/oder verifiziert werden kann.

In Schritt 320 sendet der Client eine Anforderung nach einem öffentlichen Schlüssel des ersten Servers an den ersten Server. Wie bereits im Hinblick auf die Schritte 110 und 120 des Verfahrens 100 erläutert, ist dieser Schritt optional, da der Client einen öffentlichen Schlüssel des ersten Servers alternativ von einer Zertifizierungsstelle erhalten kann. Allerdings kann die Anforderung den ersten Server auch dediziert dazu auffordern, ein neues Schlüsselpaar für diesen Client zu erzeugen, beispielsweise weil der Client zum ersten Mal mit dem ersten Server in Kontakt tritt oder weil auch der öffentliche Schlüssel des ersten Servers aufgrund einer längeren Benutzung (oder Nichtbenutzung) dieser Schlüssel erneuert werden soll.

In Schritt 330 erzeugt der erste Server ein neues Schlüsselpaar, dessen öffentlicher Schlüssel hier als *publicₛ₁^{neu}* bezeichnet und dessen privater Schlüssel als *privateₛ₁^{neu}* bezeichnet wird. Dieser Schritt wird nur durchgeführt, wenn die Anforderung 320 den ersten Server eigens zur Neuerzeugung des Schlüsselpaares aufruft.

In Schritt 340 übermittelt der erste Server den neuen öffentlichen Schlüssel des ersten Servers an den Client.

In Schritt 350 erzeugt der Client einen neuen symmetrischen Schlüssel (*symmetric^{neu}*) aus dem neuen privaten Schlüssel des Clients und dem neuen öffentlichen Schlüssel des ersten Servers unter Verwendung der bereits erläuterten KDF.

In Schritt 360 verschlüsselt der Client seinen neuen privaten Schlüssel mit dem neuen symmetrischen Schlüssel und sendet das Ergebnis *symmetric^{neu}(private_{c1}^{neu})* an den zweiten Server.

In Schritt 370 speichert der zweite Server den verschlüsselten neuen privaten Schlüssel des Clients.

In Schritt 380 löscht der zweite Server den alten verschlüsselten privaten Schlüssel des Clients. Dieser Schritt kann, wie erwähnt, in bestimmten Ausführungsformen entfallen. Dieser Schritt kann um eine vorbestimmte Zeitdauer nach Schritt 370 verzögert werden. Auf diese Weise können Daten, die noch mit dem alten öffentlichen Schlüssel verschlüsselt wurden, rekonstruiert werden.

Das Verfahren 300 kann in einer Ausführungsform durch eine Benutzereingabe ausgelöst werden. Alternativ kann das Verfahren in regelmäßigen voreingestellten Intervallen ausgeführt werden, um den verschlüsselten privaten Schlüssel des Clients immer wieder neu zu erzeugen und zu speichern. Vorzugsweise kann sich die Länge eines solchen Intervalls an dem Zeitraum orientieren, der theoretisch notwendig wäre, um bei gegebener technischer Ausstattung und gegebenen technischen Merkmalen des symmetrischen Schlüssels (dessen Länge) den symmetrischen Schlüssel zu knacken; so kann das Intervall etwa auf ein Intervall gesetzt werden, das nur einen bestimmten Bruchteil (die Hälfte) dieses Zeitraums umfasst.

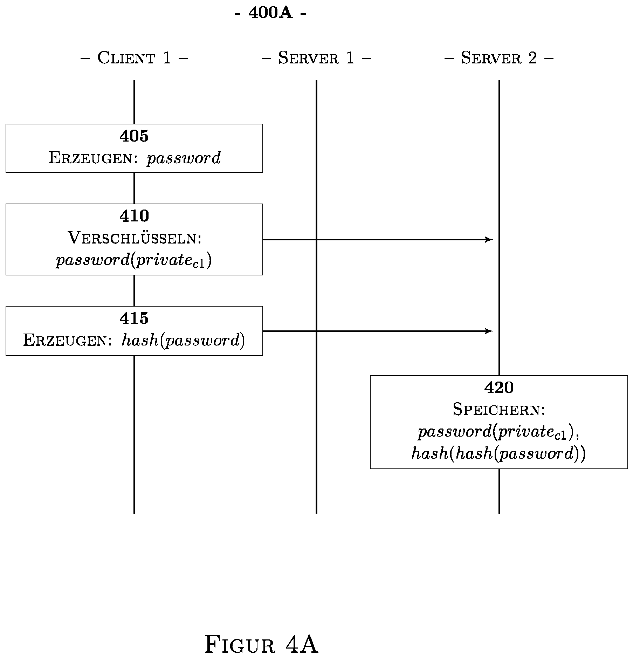

Figur 4A zeigt ein Verfahren 400A zum Anwenden eines Passworts auf einen privaten Schlüssel eines Clients. Dieses Verfahren eröffnet einem Benutzer die Möglichkeit, unabhängig von einem bestimmten Client auf seinen privaten Schlüssel zuzugreifen. Insbesondere kann der Benutzer auf seinen privaten Schlüssel mittels eines selbst gewählten Passworts zugreifen. Verschlüsselungen mit einem "Passwort" verwenden dieses als symmetrischen Schlüssel, oder erzeugen einen solchen Schlüssel mit dem Passwort als Startwert (*seed key*)*.*

Das Verfahren 400A setzt in einer Ausführungsform voraus, dass die Schritte des Verfahrens 100 bereits durchgeführt wurden, so dass ein symmetrischer Schlüssel bereits vorliegt und der mit dem symmetrischen Schlüssel verschlüsselte private Schlüssel des Clients durch den zweiten Server gespeichert wurde.

In dieser Ausführungsform umfasst das Verfahren 400A einen Schritt 405, in dem der Client ein Passwort erzeugt. Das Passwort kann auf einer Benutzereingabe beruhen oder automatisch erstellt werden. Das Passwort kann identisch sein mit einem Passwort, das ein Benutzer des Clients verwendet, um sich an dem Client zu authentifizieren und/oder einzuloggen.

In Schritt 410 verschlüsselt der Client seinen privaten Schlüssel mit dem Passwort und übermittelt den mit dem Passwort verschlüsselten privaten Schlüssel an den zweiten Server. Die Übermittlung kann, anders als in Figur 4A gezeigt, auch später erfolgen, beispielsweise bei der Durchführung von Schritt 415.

In Schritt 415 erzeugt der Client mittels einer Hashfunktion einen Hashwert aus dem Passwort und übermittelt den Hashwert an den zweiten Server. In einer Ausführungsform kann Schritt 415 sowohl den mit dem Passwort verschlüsselten privaten Schlüssel des Clients/Benutzers als auch den Hashwert des Passworts an den zweiten Server übermitteln. Gegebenenfalls kann der Client außerdem einen Bezeichner des Benutzers oder des Clients übermitteln. Der Client kann zugleich seinen mit dem symmetrischen Schlüssel verschlüsselten privaten Schlüssel übermitteln.

In Schritt 420 speichert der zweite Server diese Daten, wobei im Falle des übermittelten Hashwerts aus diesem wiederum ein weiterer Hashwert erzeugt, und dieser gespeichert wird. Client und zweiter Server verwenden vorzugsweise die gleiche Hashfunktion. Alternativ können unterschiedliche Hashfunktionen durchgeführt werden, beispielsweise die Hashfunktion sha512 auf der Client-Seite und bcrypt oder scrypt auf Seiten des zweiten Servers. Die Daten werden gemeinsam mit dem in Schritt 410 übermittelten mit dem Passwort verschlüsselten privaten Schlüssel des Clients und gegebenenfalls dem bereits in dem Verfahren 100 gespeicherten mit dem symmetrischen Schlüssel verschlüsselten privaten Schlüssel des Clients gespeichert. Diese Assoziation kann gegebenenfalls anhand des übermittelten Bezeichners oder auch anhand des Clients oder Benutzers (entsprechende Authentifizierung oder Adresse) vorgenommen werden.

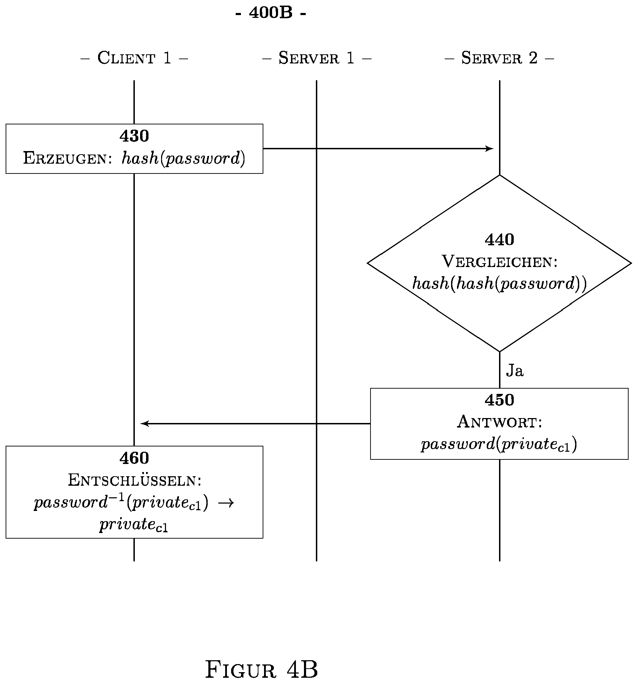

Figur 4B zeigt ein Verfahren 400B zur Wiederherstellung des privaten Schlüssels eines Clients oder Benutzers mittels eines Passworts. Das Verfahren setzt voraus, dass das Verfahren 400A bereits ausgeführt wurde und der zweite Server sowohl über den mit dem symmetrischen Schlüssel verschlüsselten privaten Schlüssel des Clients als auch über den mit dem Passwort verschlüsselten privaten Schlüssels des Clients verfügt. Der in Figur 4B gezeigte Client 1 kann der gleiche oder auch ein anderer Client als der in Figur 4A gezeigt sein.

In Schritt 430 erzeugt der Client einen Hashwert des von dem Client oder einem Benutzer des Clients bisher verwendeten oder für diesen Zweck angezeigten Passworts, unter Verwendung derjenigen Hashfunktion, die bereits in Schritt 410 des Verfahrens 400A angewendet worden war. Dieser Hashwert wird an den zweiten Server übermittelt, gegebenenfalls mit einem Bezeichner des Clients oder Benutzers, oder - wie bei den zuvor erläuterten Zugriffen auf den zweiten Server - mittels bekannter Authentifizierungsmaßnahmen. Diese Übermittlung kann in Form einer Anfrage erfolgen, mit der der zweite Server aufgefordert wird, den mit dem Passwort verschlüsselten privaten Schlüssel des Clients zu übermitteln.

In Schritt 440 erzeugt der zweite Server einen Hashwert des in Schritt 430 übermittelten Hashwerts, unter Verwendung derjenigen Hashfunktion, die bereits in Schritt 420 des Verfahrens 400A angewendet worden war und vergleicht diesen Hashwert mit dem in Schritt 420 des Verfahrens 400A gespeicherten Hashwert dieses Clients oder Benutzers. Gegebenenfalls kann der zweite Server den gespeicherten Hashwert des Clients/Benutzers anhand eines in Schritt 430 übermittelten Bezeichners des Clients/Benutzers abrufen.

In Schritt 450 übermittelt der zweite Server als Antwort auf Schritt 430 den mit dem Passwort verschlüsselten privaten Schlüssel des Clients an den Client.

In Schritt 460 entschlüsselt der Client oder Benutzer den übermittelten mit dem Passwort verschlüsselten privaten Schlüssel mit dem ihm bereits bekannten Passwort.

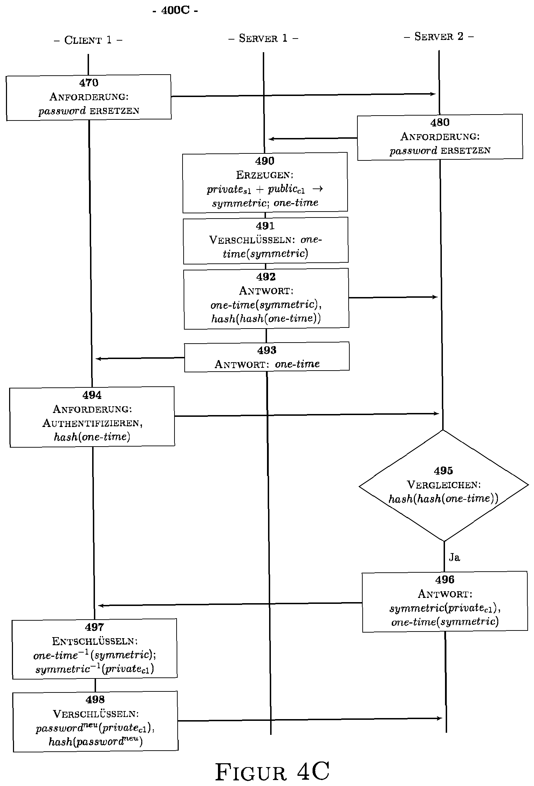

Figur 4C zeigt ein Verfahren 400C zum Ersetzen eines Passworts. Das Verfahren 400C setzt voraus, dass der durch das Verfahren 400A und das Verfahren 100 geschaffene Zustand vorliegt, dass also der private Schlüssel des Clients in unterschiedlichen Verschlüsselungen auf dem zweiten Server gespeichert ist: eine erste Verschlüsselung beruht auf dem symmetrischen Schlüssel, und wenigstens eine weitere Verschlüsselung beruht auf einem Passwort. Wie bereits erläutert wurde, kann der symmetrische Schlüssel durch Kombinationen von privaten und öffentlichen Schlüsseln des Clients und des ersten Servers rekonstruiert werden. Dieser Mechanismus kann für das Passwort nicht durchgeführt werden, da dieses nicht von asymmetrischen Schlüsseln abgeleitet ist und daher nicht ersetzt werden kann, ohne dass der Client Zugriff auf seinen privaten Schlüssel verliert. Das Verfahren 400C löst dieses Problem und ermöglicht die Wiederherstellung des Passworts.

In Schritt 470 fordert der Client den zweiten Server auf, sein Passwort zu ersetzen. In einer Ausführungsform kann der Client mit dieser Anforderung seinen Bezeichner übermitteln, um den zweiten Server in die Lage zu versetzen, das Passwort für diesen Client abzurufen.

In Schritt 480 gibt der zweite Server die Anforderung des Clients an den ersten Server weiter, wiederum gegebenenfalls unter Angabe eines Bezeichners des Clients. Zusätzlich oder alternativ kann der zweite Server einen öffentlichen Schlüssel des Clients übermitteln.

In Schritt 490 erzeugt der erste Server den symmetrischen Schlüssel für den Client oder ruft eine für diesen Client gespeicherte Kopie dieses Schlüssels ab. Außerdem erzeugt der erste Server ein Einmalpasswort (*one-time*); dieses kann seinerseits ein symmetrischer Schlüssel sein oder als ein solcher verwendet werden.

In Schritt 491 verschlüsselt der erste Server den symmetrischen Schlüssel mit dem Einmalpasswort; das Ergebnis wird als *one-time(symmetric)* bezeichnet.

In Schritt 492 übermittelt der erste Server den mit dem Einmalpasswort verschlüsselten symmetrischen Schlüssel sowie einen Hashwert des Einmalpassworts unter Verwendung derjenigen Hashfunktion, die bereits in Schritt 410 des Verfahrens 400A verwendet wurde, an den zweiten Server. Dieser Schritt erfolgt vorzugsweise unter Verwendung einer geeigneten Beschränkung, um die Herausgabe des unverschlüsselten symmetrischen Schlüssels zu verhindern. Der zweite Server generiert einen Hashwert des übermittelten Hashwerts unter Verwendung derjenigen Hashfunktion, die bereits in Schritt 420 des Verfahren 400A verwendet wurde, und speichert diesen zur weiteren Verwendung.

Die Kommunikation zwischen dem ersten Server und dem zweiten Server in den Schritten 480 und 492 erfolgt vorzugsweise unter Anwendung der beschriebenen Ansätze für Beschränkungen zwischen Verbindungen der beiden Server untereinander.

In Schritt 493 übermittelt der erste Server das Einmalpasswort an den Client.

In Schritt 494 fordert der Client den zweiten Server auf, den Client anhand eines Hashwerts des Einmalpassworts zu authentifizieren. Zu diesem Zweck übermittelt der Client diesen Hashwert und gegebenenfalls den Bezeichner des Clients. Auch hier kommt dieselbe Hashfunktion, die bereits in Schritt 410 des Verfahrens 400A verwendet wurde, zum Einsatz.

In Schritt 495 vergleicht der zweite Server die in Schritt 493 und Schritt 494 erhaltenen zweifachen Hashwerte; wo lediglich ein einfacher Hashwert übermittelt wurde, erzeugt der zweite Server den zweifachen Hashwert unter Verwendung derselben Hashfunktion, die bereits in Schritt 420 des Verfahrens 400A verwendet wurde, selbst.

In Schritt 496 antwortet der zweite Server an den Client mit einer Übermittlung des mit dem in Schritt 150 des Verfahrens 100 gespeicherten symmetrischen Schlüssel verschlüsselten privaten Schlüssels des Clients sowie dem mit dem Einmalpasswort verschlüsselten symmetrischen Schlüssel, der dem zweiten Server von dem ersten Server in Schritt 492 zur Verfügung gestellt wurde. Diese Übermittlung erfolgt unter der Bedingung, dass die in Schritt 495 verglichenen Werte identisch sind.

In Schritt 497 entschlüsselt der Client den mit dem Einmalpasswort verschlüsselten symmetrischen Schlüssel, und verwendet den symmetrischen Schlüssel, um den mit dem symmetrischen Schlüssel verschlüsselten privaten Schlüssel des Clients zu entschlüsseln.

In Schritt 498 verschlüsselt der Client seinen privaten Schlüssel mit einem neuen Passwort (*password^{neu}*)*.* Dieses neue Passwort kann beispielsweise als Zufallswert erzeugt oder auch mittels Benutzereingabe bestimmt werden. Der Client erstellt außerdem einen Hashwert des neuen Passworts und übermittelt den verschlüsselten privaten Schlüssel und den Hashwert an den zweiten Server, der beide Werte speichert; im Falle des Hashwerts speichert der zweite Server vorzugsweise einen zweifachen Hashwert des Passworts. Schritt 498 und das nachfolgende Speichern durch den zweiten Server erfolgen analog zu den Schritten 410 und 420 des Verfahrens 400A. Der gespeicherte Hashwert des alten Passworts kann gelöscht werden, gegebenenfalls nach Abwarten einer vorbestimmten Zeitdauer.

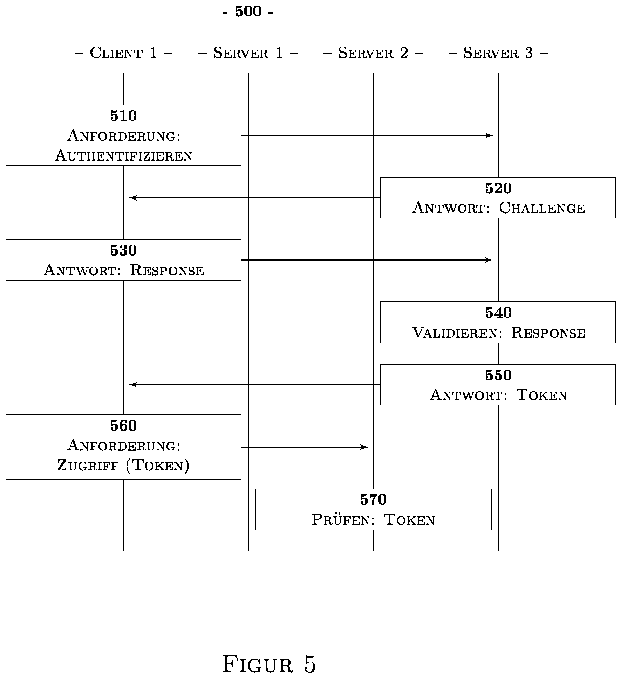

Figur 5 zeigt ein Verfahren 500, das die Verwendung eines weiteren Servers (*Server 3*) einschließt, um den Client zu authentifizieren. Das Verfahren ermöglicht die Integration eines *Single-Sign-on-Mechanismus* in die hier beschriebenen Ausführungsformen. Dieser Mechanismus kann beispielsweise durch OAuth, Auth0, SAML (*Security Assertion Markup Language*) oder andere implementiert werden. Der dritte Server kann zur Authentifikation des Clients beispielsweise auf eine Challenge-Response-Authentifizierung zurückgreifen. Alternativ können auch bekannte Verfahren wie etwa passwortbasierte Authentifikation, PAKE (*Password-authenticated key exchange*) oder passwortlose Verfahren wie beispielsweise WebAuthn verwendet werden.

In Schritt 510 fordert der Client den dritten Server auf, den Client zu authentifizieren. In einer Ausführungsform kann dieser Anforderung eine entsprechende Anforderung des Clients an den zweiten Server vorausgehen, der dem Client Angaben über den dritten Server übermittelt, um den Client in die Lage zu versetzen, eine Verbindung zu dem dritten Server aufzubauen.

In Schritt 520 verifiziert der dritte Server den Client, beispielsweise im Rahmen der in Figur 5 gezeigten Challenge-Response-Authentifizierung. Bei Verwendung der Challenge-Response-Authentifizierung antwortet der dritte Server in Schritt 520 mit einer Challenge, die beispielsweise eine Zufallszahl enthält, die vorzugsweise mittels eines Passworts verschlüsselt ist. In einer Ausführungsform kann ein Passwort verwendet werden, das zu diesem Zweck von dem dritten Server gespeichert wird und dem Client bekannt ist.

In Schritt 530 antwortet der Client mit einer *Response,* die an den dritten Server übermittelt wird. Die Response kann beispielsweise aus der Zufallszahl erzeugt werden, indem der Client diese unter Verwendung seines Passworts entschlüsselt, durch eine vorbestimmte Funktion (beispielsweise Inkrementieren) modifiziert und mit dem Passwort als Schlüssel erneut verschlüsselt.

In Schritt 540 validiert der dritte Server die Response des Clients, beispielsweise durch Entschlüsseln der übermittelten verschlüsselten Zufallszahl und gegebenenfalls Anwenden der vorbestimmten Funktion.

In Schritt 550 antwortet der dritte Server auf die Response des Clients mit einem Token, das an den Client übermittelt wird. Das Token ist ein digitales Objekt, das zur Verwendung als Identitätsnachweis durch den Client vorgesehen ist.

In Schritt 560 übermittelt der Client eine Zugriffsanforderung an den zweiten Server. Die Zugriffsanforderung enthält das besagte Token.

In Schritt 570 prüft der zweite Server das Token, beispielsweise unter Verwendung von Daten über den Client, die zuvor auf dem zweiten Server gespeichert wurden. Hierzu zählen etwa Bezeichner des Clients.

Das Verfahren 500 kann mit Verfahren 700 fortgesetzt werden, das weiter unten beschrieben wird.

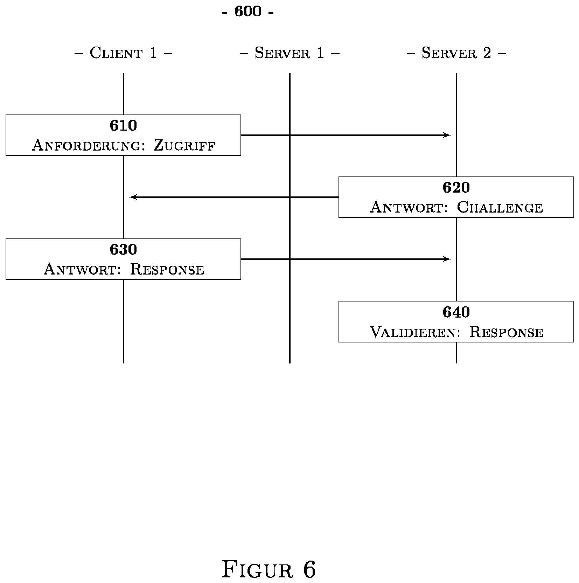

Figur 6 zeigt ein Verfahren 600, das ohne Beteiligung eines dritten Servers durchgeführt wird und als Alternative zu dem Verfahren 500 angegeben wird.

In Schritt 610 übermittelt der Client eine Zugriffsanforderung an den zweiten Server. Gegebenenfalls kann diese Anforderung einen Bezeichner des Clients enthalten oder - wie auch bisher beschriebene Anforderungen - einer Authentifizierungsmaßnahme unterliegen.

In Schritt 620 antwortet der zweite Server auf die Anforderung mit einer *Challenge,* die an den Client übermittelt wird.

In Schritt 630 antwortet der Client wiederum auf die Challenge und übermittelt eine Response an den zweiten Server.

In Schritt 640 validiert der zweite Server die Response. Das Verfahren 600 kann mit dem unten beschriebenen Verfahren 700 fortgesetzt werden.

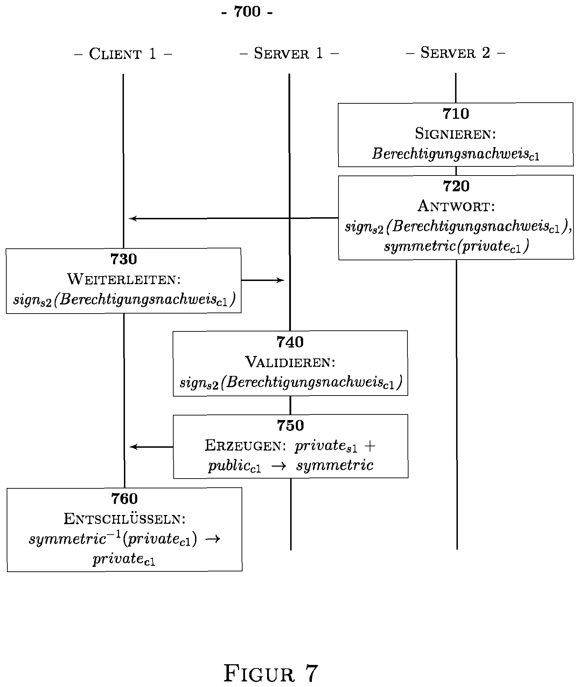

Figur 7 zeigt ein Verfahren 700, das eine Absicherung von Berechtigungen des Clients an dem symmetrischen Schlüssel bewirkt. Das Verfahren 700 setzt voraus, dass vorbereitend eines der Verfahren 500 und 600 ausgeführt wurde.

In Schritt 710 signiert der zweite Server einen Berechtigungsnachweis des Clients mit dem privaten Schlüssel des zweiten Servers, das Ergebnis wird hier als *signₛ₂(Berechtigungsnachweis_{c1})* bezeichnet. Der Berechtigungsnachweis ist eine Datenstruktur, die Daten oder Datenorte bezeichnen sowie einen oder mehrere Benutzer oder Clients identifizieren kann. Zusätzlich kann die Datenstruktur Definitionen darüber enthalten, welche Zugriffsrechte der oder die Benutzer/Clients an den betreffenden Daten/Datenorten besitzen oder erhalten sollen. Alternativ zu einer Identifikation solcher Benutzer oder Clients kann die Datenstruktur Zertifikatsketten enthalten oder auf diese verweisen. Zertifikatsketten setzen ein Root-Zertifikat voraus und können benutzt werden, um eine Identität eines Benutzers oder Clients zu verifizieren. Das Signieren eines solchen Berechtigungsnachweises kann somit entweder durch den zweiten Server vorgenommen werden oder an Zertifizierungsstellen delegiert werden. Ein Zertifikat ist ein signiertes Dokument, das die Möglichkeit bestätigt, eine digitale Unterschrift (Signatur) einer bestimmten Partei oder Entität zuzuordnen, die wiederum zu bestimmten Aktionen berechtigt ist. Solche Aktionen umfassen das Ausstellen von Identitäts- oder Berechtigungsnachweisen oder das weitere Delegieren solcher Aktionen. Ein solcher signierter Nachweis kann verifiziert werden durch Anwendung des öffentlichen Schlüssels, der zu dem privaten Schlüssel gehört, mit dem die Signatur erstellt wurde. Beispielsweise verwendet der erste Server den öffentlichen Schlüssel publicₛ₂ des zweiten Servers oder den öffentlichen Schlüssel eines Root-Zertifikats der Zertifikatskette.

In einer Ausführungsform umfasst Schritt 710 zusätzlich, die Signatur mit einem Ablaufdatum zu versehen. Beispielsweise kann der Berechtigungsnachweis mit einem aktuellen Zeitstempel und einer zeitlichen Dauer versehen werden.

In Schritt 720 übermittelt der zweite Server den signierten Berechtigungsnachweis und den mit dem symmetrischen Schlüssel verschlüsselten privaten Schlüssel des Clients an den Client.

In Schritt 730 leitet der Client den signierten Berechtigungsnachweis an den ersten Server weiter und fordert auf diesem Weg den symmetrischen Schlüssel an.

In Schritt 740 validiert der erste Server den signierten Berechtigungsnachweis unter Verwendung des öffentlichen Schlüssels des zweiten Servers oder einer Zertifikatskette. Wie bereits früher erläutert, kann dieser öffentliche Schlüssel beispielsweise von einer Zertifizierungsstelle bezogen werden oder auch in Schritt 730 von dem Client übermittelt worden sein. In Ausführungsformen mit Ablaufdatum des Berechtigungsnachweises umfasst das Validieren eine Prüfung, ob eine Differenz aus einem aktuellen Zeitstempel und einem Zeitstempel des Berechtigungsnachweises größer ist als die in dem Berechtigungsnachweis angegebene zeitliche Dauer. Ist dies der Fall, wird die Validierung und das Verfahren 700 insgesamt abgebrochen.

In Schritt 750 erzeugt der erste Server den symmetrischen Schlüssel, wie bereits früher dargestellt wurde. Alternativ kann der erste Server den symmetrischen Schlüssel lokal abrufen; zu diesem Zweck kann der Client in Schritt 730 ferner einen entsprechenden Bezeichner des Clients an den ersten Server übermittelt haben. Der symmetrische Schlüssel wird an den Client übermittelt.

In Schritt 760 entschlüsselt der Client den in Schritt 720 erhaltenen, mit dem symmetrischen Schlüssel verschlüsselten, privaten Schlüssel des Clients.

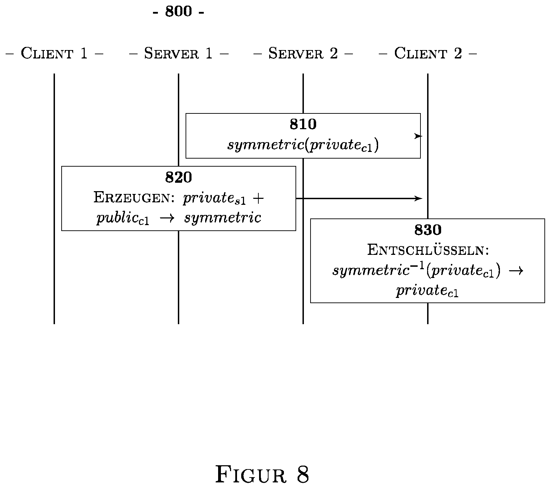

Figur 8 zeigt ein Verfahren 800, das die Herausgabe und Entschlüsselung des privaten Schlüssels des Clients an einen Dritten ermöglicht. Ein solches Szenario kann in einer realen Anwendung der Erfindung notwendig sein, wenn ein Benutzer nicht in der Lage ist, eines der hier beschriebenen Verfahren selbst auszuführen, oder wenn der erste Client nicht mehr existiert, ein neuer Client jedoch noch nicht angemeldet wurde oder angemeldet werden konnte. Das Verfahren ermöglicht also auch den Zugriff auf Benutzerdaten im Todesfall oder bei einer rechtlichen Anordnung zur Herausgabe von Benutzerdaten.

Voraussetzung für das Verfahren 800 ist die Vorlage einer rechtlichen oder vertraglichen Anordnung gegenüber dem zweiten Server. Diese Anordnung wird durch einen zweiten Client (*Client 2*) vorgelegt und durch den zweiten Server geprüft.

In Schritt 810 übermittelt der zweite Server nach erfolgreicher Prüfung der Anordnung den dort gespeicherten, mit dem symmetrischen Schlüssel verschlüsselten, privaten Schlüssels des ersten Clients (*Client* 1) and den zweiten Client. Die Anordnung kann automatisch oder manuell durch einen Administrator des zweiten Servers geprüft werden. Alternativ kann die Anordnung einen signierten Berechtigungsnachweis umfassen, der durch den zweiten Server automatisch validiert werden kann unter Verwendung eines öffentlichen Schlüssels des zweiten Clients.

In Schritt 820 erzeugt der erste Server den symmetrischen Schlüssel aus dem privaten Schlüssel des ersten Servers und dem öffentlichen Schlüssel des ersten Clients oder ruft einen zuvor gespeicherten symmetrischen Schlüssel ab. Der symmetrische Schlüssel wird an den zweiten Client übermittelt. Schritt 820 erfolgt wie Schritt 810 als Antwort auf eine Anforderung des zweiten Clients, die einen Berechtigungsnachweis, insbesondere einen von dem zweiten Server signierten Berechtigungsnachweis, enthält und von dem ersten Server wie zuvor durch den zweiten Server geprüft wird. Der Berechtigungsnachweis kann auch rechtlicher oder vertraglicher Natur sein. Die Anforderung des zweiten Clients kann neben einem Berechtigungsnachweis auch einen Bezeichner des Clients enthalten, um den ersten Server in die Lage zu versetzen, den ersten Client oder dessen Benutzer zu identifizieren. In einer Ausführungsform kann Schritt 820 außerdem das Übermitteln einer Nachricht an den ersten Client und/oder den zweiten Server umfassen. Diese Nachricht enthält beispielsweise Angaben über den Berechtigungsnachweis und/oder den zweiten Client, von dem die Anforderung nach Herausgabe des symmetrischen Schlüssels ausging. Die Nachricht kann darüber hinaus eine Aufforderung an den ersten Client zur Einwilligung in die Herausgabe des symmetrischen Schlüssels enthalten; in einer solchen Ausführungsform kann der erste Server eine zeitliche Dauer festsetzen, innerhalb der er auf eine Antwort des ersten Clients wartet, und kann die Herausgabe des symmetrischen Schlüssels fortsetzen oder aussetzen, falls nach Ablauf der Dauer keine Antwort von dem ersten Client an dem ersten Server eingeht.

In Schritt 830 entschlüsselt der zweite Client den verschlüsselten privaten Schlüssel des ersten Clients.

Die hier beschriebenen Ausführungsformen werden durch computerlesbare Medien ergänzt, die Anweisungen speichern, die bei ihrer Ausführung durch einen oder mehrere Computer, wie beispielsweise die oben erläuterten Clients und Server, die erläuterten Verfahren durchführen. Desgleichen umfassen Ausführungsformen der Erfindung auch die Clients und Server selbst sowie die daraus gebildeten Systeme.

Die hier offenbarten Maßnahmen zur Sicherung der Verfügbarkeit kryptografischer Schlüssel, ohne die Vertraulichkeit zu kompromittieren, erfolgt zum größten Teil automatisch, ohne dass Eingriffe durch Benutzer erforderlich sind, und umfasst die Erstellung, Absicherung, Erneuerung und Wiederherstellung privater und öffentlicher Schlüssel. Zugleich können diese Schlüssel verwendet werden, um fortwährend und ebenfalls automatisch Daten zwecks Übertragung und/oder Speicherung zu verschlüsseln und/oder zu entschlüsseln, Daten digital zu signieren und/oder sich digital auszuweisen. Somit ermöglicht die Erfindung eine vollständige Ende-zu-Ende-Verschlüsselung, bei der die persistente Speicherung der Daten an den Zielgeräten nicht unverschlüsselt im Klartext erfolgen muss, um die Verfügbarkeit der Daten zu garantieren. Die Maßnahmen liefern durch die beschriebenen Verfahren, insbesondere auch durch regelmäßige Erneuerung der Schlüssel, einen hohen Sicherheitsstandard, der durch herkömmliche Ansätze nicht erreicht wird. Die Ausführungsformen ermöglichen es, die Maßnahmen an die Sicherheitsanforderungen und IT-Infrastruktur des Anwenders bzw. Systemverantwortlichen anzupassen, beispielsweise durch die Verteilung der zur Wiederherstellung benötigter Informationen auf beliebig viele Server oder das technische Erzwingen fachlicher Prozesse zur Schlüsselwiederherstellung.

## Patentansprüche

1. Verfahren zum Sichern eines privaten Schlüssels eines ersten Clients, umfassend:
Durch den ersten Client Anfordern (110) eines öffentlichen Schlüssels eines ersten Servers;
durch den ersten Client Erzeugen (130) eines symmetrischen Schlüssels aus dem privaten Schlüssel des ersten Clients und dem öffentlichen Schlüssel des ersten Servers, Verschlüsseln (140) des privaten Schlüssels des ersten Clients mit dem symmetrischen Schlüssel, und Übermitteln des verschlüsselten privaten Schlüssels des ersten Clients an einen zweiten Server; und
durch den zweiten Server Speichern (150) des verschlüsselten privaten Schlüssels des ersten Clients.

2. Verfahren nach Anspruch 1, ferner umfassend:
Durch den ersten Client Abrufen (210, 230) des symmetrischen Schlüssels von dem ersten Server und des verschlüsselten privaten Schlüssels des ersten Clients von dem zweiten Server;
durch den ersten Server Erzeugen (240) des symmetrischen Schlüssels aus einem privaten Schlüssel des ersten Servers und einem öffentlichen Schlüssel des ersten Clients, und Übermitteln des symmetrischen Schlüssels an den ersten Client, wobei der private Schlüssel des ersten Servers zu dem öffentlichen Schlüssel des ersten Servers gehört und der öffentliche Schlüssel des ersten Clients zu dem privaten Schlüssel des ersten Clients gehört; und
durch den ersten Client Entschlüsseln (250) des verschlüsselten privaten Schlüssels des ersten Clients mittels des symmetrischen Schlüssels.

3. Verfahren nach Anspruch 2, wobei das Abrufen (210, 230) des verschlüsselten privaten Schlüssels des ersten Clients und/oder des symmetrischen Schlüssels mittels Verschlüsselung anhand eines einmal verwendeten Passworts durchgeführt wird.

4. Verfahren nach einem der vorstehenden Ansprüche, ferner umfassend Erneuern des verschlüsselten privaten Schlüssels des ersten Clients, wobei das Erneuern umfasst:
Durch den ersten Client Erzeugen (310) eines neuen privaten Schlüssels und öffentlichen Schlüssels des ersten Clients, und Anfordern (320) eines neuen öffentlichen Schlüssels des ersten Servers von dem ersten Server;
durch den ersten Server Erzeugen (330) des neuen öffentlichen Schlüssels und eines neuen privaten Schlüssels des ersten Servers, und Übermitteln (340) des neuen öffentlichen Schlüssels des ersten Servers an den ersten Client;
durch den ersten Client Erzeugen (350) eines neuen symmetrischen Schlüssels aus dem neuen privaten Schlüssel des ersten Clients und dem neuen öffentlichen Schlüssel des ersten Servers, Verschlüsseln (360) des neuen privaten Schlüssels des ersten Clients mit dem neuen symmetrischen Schlüssel, und Übermitteln des neuen verschlüsselten privaten Schlüssels des ersten Clients an den zweiten Server; und
durch den zweiten Server Speichern (370) des neuen verschlüsselten privaten Schlüssels des ersten Clients, und Löschen (380) des zuvor gespeicherten verschlüsselten privaten Schlüssels des ersten Clients.

5. Verfahren nach Anspruch 4, ferner umfassend:
Wobei das Erneuern des verschlüsselten privaten Schlüssels des ersten Clients als Antwort auf eine Benutzeranforderung durchgeführt wird.

6. Verfahren nach Anspruch 4, wobei das Erneuern des verschlüsselten privaten Schlüssels des ersten Clients automatisch in regelmäßigen Intervallen durchgeführt wird.

7. Verfahren nach einem der vorstehenden Ansprüche, ferner umfassend:
Durch den ersten Client Verschlüsseln (410) des privaten Schlüssels des ersten Clients mit einem Passwort, und Übermitteln des mit dem Passwort verschlüsselten privaten Schlüssels des ersten Clients sowie eines aus dem Passwort erzeugten Hashwerts (415) an den zweiten Server; und
durch den zweiten Server Speichern (420) des mit dem Passwort verschlüsselten privaten Schlüssels des ersten Clients sowie eines Hashwerts des übermittelten Hashwerts.

8. Verfahren nach Anspruch 7, ferner umfassend:
Durch den ersten Client Übermitteln (430) des Hashwerts des Passworts an den zweiten Server;
durch den zweiten Server Vergleichen (440) eines Hashwerts des übermittelten Hashwerts mit dem gespeicherten Hashwert des ersten Clients, und Übermitteln (450) des mit dem Passwort verschlüsselten privaten Schlüssels des ersten Clients an den ersten Client; und
durch den ersten Client Entschlüsseln (460) des übermittelten privaten Schlüssels des ersten Clients mit dem Passwort.

9. Verfahren nach Anspruch 7 oder 8, ferner umfassend:
Durch den ersten Client Übermitteln (470) einer Anforderung zum Ersetzen des Passworts an den zweiten Server;
Durch den zweiten Server Übermitteln (480) einer Anforderung zum Ersetzen des Passworts an den ersten Server,
durch den ersten Server Erzeugen (490) des symmetrischen Schlüssels aus dem privaten Schlüssel des ersten Servers und dem öffentlichen Schlüssel des ersten Clients, Erzeugen (490) eines Einmalpassworts, Verschlüsseln (491) des symmetrischen Schlüssels mit dem Einmalpasswort, Erzeugen (492) eines Hashwerts des Einmalpassworts, und Übermitteln (492, 493) des verschlüsselten symmetrischen Schlüssels und eines Hashwerts des Hashwerts des Einmalpassworts an den zweiten Server sowie des Einmalpassworts an den ersten Client;
durch den ersten Client Übermitteln (494) einer Anforderung zum Authentifizieren des ersten Clients an den zweiten Server, wobei die Anforderung einen Hashwert des Einmalpassworts enthält;
durch den zweiten Server Vergleichen (495) des Hashwerts des ersten Servers mit einem Hashwert des von dem ersten Client übermittelten Hashwert des Einmalpassworts, und Übermitteln (496) des mit dem symmetrischen Schlüssel verschlüsselten privaten Schlüssels des ersten Clients sowie des mit dem Einmalpasswort verschlüsselten symmetrischen Schlüssels an den ersten Client; und
durch den ersten Client Entschlüsseln (497) des verschlüsselten symmetrischen Schlüssels mit dem Einmalpasswort, Entschlüsseln (497) des verschlüsselten privaten Schlüssels des ersten Clients mit dem symmetrischen Schlüssel, Verschlüsseln (498) des privaten Schlüssels des ersten Clients mit einem neuen Passwort, und Übermitteln (498) des mit dem neuen Passwort verschlüsselten privaten Schlüssels des ersten Clients und eines Hashwerts des neuen Passworts an den zweiten Server.

10. Verfahren nach einem der vorstehenden Ansprüche, ferner umfassend:
Durch den ersten Client Übermitteln (510) einer Authentifizierungsanforderung an einen dritten Server;
durch den dritten Server Übermitteln (520) einer Challenge an den ersten Client;
durch den ersten Client Übermitteln (530) einer Response auf die Challenge an den dritten Server;
durch den dritten Server Validieren (540) der Response, und Übermitteln (550) eines Zugriffstokens an den ersten Client;
durch den ersten Client Übermitteln (560) einer Zugriffsanforderung an den zweiten Server, wobei die Zugriffsanforderung das Zugriffstoken enthält; und
durch den zweiten Server Prüfen (570) des Zugriffstokens.

11. Verfahren nach einem der Ansprüche 1 bis 9, ferner umfassend:
Durch den ersten Client Übermitteln (610) einer Zugriffsanforderung an den zweiten Server,
durch den zweiten Server Übermitteln (620) einer Challenge an den ersten Client;
durch den ersten Client Übermitteln (630) einer Response auf die Challenge an den zweiten Server; und
durch den zweiten Server Validieren (640) der Response anhand der Challenge.

12. Verfahren nach Anspruch 10 oder 11, ferner umfassend:
Durch den zweiten Server Signieren (710) eines Berechtigungsnachweises des ersten Clients mit dem privaten Schlüssel des zweiten Servers, und Übermitteln (720) des signierten Berechtigungsnachweises und des mit dem symmetrischen Schlüssel verschlüsselten privaten Schlüssels des Clients an den ersten Client;
durch den ersten Client Übermitteln (730) des signierten Berechtigungsnachweises an den ersten Server;
durch den ersten Server Validieren (740) des signierten Berechtigungsnachweises des ersten Clients mittels des öffentlichen zertifizierten Schlüssels des zweiten Servers, Erzeugen (750) des symmetrischen Schlüssels aus dem privaten Schlüssel des ersten Servers und dem öffentlichen Schlüssel des ersten Clients, und Übermitteln (750) des symmetrischen Schlüssels an den ersten Client, und
durch den ersten Client Entschlüsseln (760) des verschlüsselten privaten Schlüssels des ersten Clients mit dem symmetrischen Schlüssel.

13. Verfahren nach Anspruch 12, wobei das Signieren (710) des Berechtigungsnachweis des ersten Clients umfasst, die Signatur des Berechtigungsnachweises mit einem oder mehreren Zeitstempeln zu versehen, und wobei das Validieren (740) des signierten Berechtigungsnachweis abgebrochen wird, wenn ein durch den oder die Zeitstempel definierter Zeitraum verstrichen ist

14. Verfahren nach einem der vorstehenden Ansprüche, ferner umfassend:
Durch den zweiten Server Übermitteln (810) des mit dem symmetrischen Schlüssel verschlüsselten privaten Schlüssels des ersten Clients an einen zweiten Client;
Durch den ersten Server Erzeugen (820) des symmetrischen Schlüssels aus dem privaten Schlüssel des ersten Servers und dem öffentlichen Schlüssel des ersten Clients, und Übermitteln (820) des symmetrischen Schlüssels an den zweiten Client, und
Durch den zweiten Client Entschlüsseln (830) des privaten Schlüssels des ersten Clients mittels des symmetrischen Schlüssels.

15. System zum Sichern eines privaten Schlüssels eines Clients, umfassend:
Einen Client, einen ersten Server und einen zweiten Server;
wobei der Client eingerichtet ist zum Anfordern (110) eines öffentlichen Schlüssels des ersten Servers;
wobei der erste Server eingerichtet ist zum Übermitteln (120) des öffentlichen Schlüssels des ersten Servers an den Client;
wobei der Client ferner eingerichtet ist zum Erzeugen (130) eines symmetrischen Schlüssels aus dem privaten Schlüssel des Clients und dem öffentlichen Schlüssel des ersten Servers, und zum Verschlüsseln (140) des privaten Schlüssels des Clients mit dem symmetrischen Schlüssel, und zum Übermitteln (140) des verschlüsselten privaten Schlüssels des Clients an einen zweiten Server; wobei der zweite Server eingerichtet ist zum Speichern (150) des verschlüsselten privaten Schlüssels des Clients.

16. System nach Anspruch 15, wobei der Client ferner eingerichtet ist zum Abrufen (210, 230) des symmetrischen Schlüssels von dem ersten Server und des verschlüsselten privaten Schlüssels des Clients von dem zweiten Server, sowie zum Entschlüsseln (250) des verschlüsselten privaten Schlüssels des Clients mittels des symmetrischen Schlüssels.

17. Computerlesbares Medium mit darauf gespeicherten Befehlen, die, wenn sie durch einen oder mehrere Prozessoren ausgeführt werden, das Verfahren nach einem der Ansprüche 1 bis 14 durchführen.

## Claims

1. Method for securing a private key of a first client, comprising:
A request (110) made by the first client for a public key of a first server;
generation (130) by the first client of a symmetric key from the private key of the first client and the public key of the first server, encryption (140) of the private key of the first client with the symmetric key, and transmission of the encrypted private key of the first client to a second server; and
storage (150) by the second server of the encrypted private key of the first client.

2. Method according to claim 1, further comprising:
retrieval (210, 230) by the first client of the symmetric key from the first server and the encrypted private key of the first client from the second server;
generation (240) by the first server of the symmetric key from a private key of the first server and a public key of the first client, and transmission of the symmetric key to the first client, wherein the private key of the first server is associated with the public key of the first server and the public key of the first client is associated with the private key of the first client; and decryption (250) by the first client of the encrypted private key of the first client using the symmetric key.

3. Method according to claim 2, wherein the retrieval (210, 230) of the encrypted private key of the first client and/or of the symmetric key is carried out by means of encryption using a one-time password.

4. Method according to any one of the preceding claims, further comprising renewal of the encrypted private key of the first client, wherein the renewal comprises:
generation (310) by the first client of a new private key and public key of the first client, and requesting (320) a new public key of the first server from the first server;
generation (330) by the first server of the new public key and a new private key of the first server, and transmission (340) of the new public key of the first server to the first client;
generation (350) by the first client of a new symmetric key from the new private key of the first client and the new public key of the first server, encryption (360) of the new private key of the first client with the new symmetric key, and transmission of the new encrypted private key of the first client to the second server; and
storage (370) by the second server of the new encrypted private key of the first client, and deletion (380) of the previously stored encrypted private key of the first client.

5. Method according to claim 4, further comprising:
wherein the renewal of the encrypted private key of the first client is carried out in response to a user request.

6. Method according to claim 4, wherein the renewal of the encrypted private key of the first client is carried out automatically at regular intervals.

7. Method according to any one of the preceding claims, further comprising:
encryption (410) by the first client of the first private key of the first client with a password, and transmission of the first private key of the first client encrypted with the password as well as a hash value (415) generated from the password to the second server; and
storage (420) by the second server of the private key of the first client encrypted with the password as well as a hash value of the hash value that has been transmitted.

8. Method according to claim 7, further comprising:
transmission (430) by the first client of the hash value of the password to the second server;
comparison (440) by the second server of a hash value of the hash value that has been transmitted with the stored hash value of the first client, and transmission (450) to the first client of the private key of the first client encrypted with the password; and decryption (460) by the first client of the private key of the first client that has been transmitted with the password.

9. Method according to claim 7 or claim 8, further comprising:
transmission (470) by the first client of a request to replace the password to the second server;
transmission (480) by the second server of a request to replace the password to the first server,
generation (490) by the first server of the symmetric key from the private key of the first server and the public key of the first client, generation (490) of a one-time password, encryption (491) of the symmetric key with the one-time password, generation (492) of a hash value of the one-time password, and transmission (492, 493) of the encrypted symmetric key and a hash value of the hash value of the one-time password to the second server, as well as of the one-time password to the first client;
transmission (494) by the first client of a request for authentication of the first client to the second server, wherein the request contains a hash value of the one-time password;
comparison (495) by the second server of the hash value of the first server with a hash value of the hash value of the one-time password transmitted by the first client, and transmission (496) to the first client of the private key of the first client encrypted with the symmetric key as well as of the symmetric key encrypted with the one-time password; and decryption (497) by the first client of the encrypted symmetric key with the one-time password, decryption (497) of the encrypted private key of the first client with the symmetric key, encryption (498) of the private key of the first client with a new password, and transmission (498) of the private key of the first client encrypted with the new password and of a hash value of the new password to the second server.

10. Method according to any one of the preceding claims, further comprising:
transmission (510) by the first client of an authentication request to a third server;
transmission (520) by the third server of a challenge to the first client;
transmission (530) by the first client of a response to the challenge to the third server;
validation (540) by the third server of the response, and transmission (550) of an access token to the first client;
transmission (560) by the first client of an access request to the second server, wherein the access request includes the access token; and
verification (570) by the second server of the access token.

11. Method according to any one of claims 1 to 9, further comprising:
transmission (610) by the first client of an access request to the second server,
transmission (620) by the second server of a challenge to the first client;
transmission (630) by the first client of a response to the challenge to the second server; and
validation (640) of the second server of the response based on the challenge.

12. Method according to claim 10 or claim 11, further comprising:
signing (710) by the second server of a credential of the first client with the private key of the second server, and transmission (720) of the signed credential and of the private key of the client encrypted with the symmetric key to the first client;
transmission (730) by the first client of the signed credential to the first server;
validation (740) by the first server of the signed credential of the first client by means of the certified public key of the second server, generation (750) of the symmetric key from the private key of the first server and the public key of the first client, and transmission (750) of the symmetric key to the first client; and
decryption (760) by the first client of the encrypted private key of the first client with the symmetric key.

13. Method according to claim 12, wherein the signing (710) of the credential of the first client comprises providing the signature of the credential with one or a plurality of timestamps, and wherein the validation (740) of the signed credential is aborted when a time period defined by one or a plurality of timestamps has elapsed.

14. Method according to any one of the preceding claims, further comprising:
transmission (810) by the second server of the private key of the first client encrypted with the symmetric key to a second client;
generation (820) by the first server of the symmetric key from the private key of the first server and the public key of the first client, and transmission (820) of the symmetric key to the second client; and
decryption (830) by the second client of the private key of the first client using the symmetric key.

15. System for securing a private key of a client, comprising:
a client, a first server, and a second server;
wherein the client is set up to request (110) a public key of the first server;
wherein the first server is set up to transmit (120) the public key of the first server to the client;
wherein the client is further set up to generate (130) a symmetric key from the private key of the client and the public key of the first server, and to encrypt (140) the private key of the client with the symmetric key, and to transmit (140) the encrypted private key of the client to a second server; wherein the second server is set up to store (150) the encrypted private key of the client.

16. System according to claim 15, wherein the client is further set up for retrieval (210, 230) of the symmetric key from the first server and the encrypted private key of the client from the second server, as well as for decryption (250) of the encrypted private key of the client by means of the symmetric key.

17. Computer-readable medium having commands stored thereon that, when carried out by one or a plurality of processors, carries out the method according to any one of claims 1 to 14.

## Revendications

1. Procédé de sécurisation d'une clé privée d'un premier client, comprenant :
par le premier client, demande (110) d'une clé publique d'un premier serveur ;
par le premier client, génération (130) d'une clé symétrique à partir de la clé privée du premier client et de la clé publique du premier serveur, cryptage (140) de la clé privée du premier client avec la clé symétrique, et communication de la clé privée cryptée du premier client à un deuxième serveur ; et
par le deuxième serveur, enregistrement (150) de la clé privée cryptée du premier client.

2. Procédé selon la revendication 1, comprenant en outre :
par le premier client, récupération (210, 230) de la clé symétrique auprès du premier serveur et la clé privée cryptée du premier client auprès du deuxième serveur ;
par le premier serveur, génération (240) de la clé symétrique à partir d'une clé privée du premier serveur et d'une clé publique du premier client, et communication de la clé symétrique au premier client, la clé privée du premier serveur appartenant à la clé publique du premier serveur et la clé publique du premier client appartenant à la clé privée du premier client ; et
par le premier client, décryptage (250) de la clé privée cryptée du premier client au moyen de la clé symétrique.

3. Procédé selon la revendication 2, la récupération (210, 230) de la clé privée cryptée du premier client et/ou de la clé symétrique étant effectuée au moyen du décryptage à l'aide d'un mot de passe utilisé une seule fois.

4. Procédé selon l'une des revendications précédentes, comprenant en outre le renouvellement de la clé privée cryptée du premier client, le renouvellement comprenant :
par le premier client, génération (310) d'une nouvelle clé privée et d'une nouvelle clé publique du premier client, et demande (320) d'une nouvelle clé publique du premier serveur au premier serveur ;
par le premier serveur, génération (330) de la nouvelle clé publique et d'une nouvelle clé privée du premier serveur, et communication (340) au premier client de la nouvelle clé publique du premier serveur ;
par le premier client, génération (350) d'une nouvelle clé symétrique à partir de la nouvelle clé privée du premier client et de la nouvelle clé publique du premier serveur, cryptage (360) de la nouvelle clé privée du premier client avec la nouvelle clé symétrique, et communication au deuxième serveur de la nouvelle clé privée cryptée du premier client ; et
par le deuxième serveur, enregistrement (370) de la nouvelle clé privée cryptée du premier client, et suppression (380) de la clé privée cryptée enregistrée précédemment du premier client.

5. Procédé selon la revendication 4, comprenant en outre :
le renouvellement de la clé privée cryptée du premier client étant effectuée en réponse à une demande de l'utilisateur.

6. Procédé selon la revendication 4, le renouvellement de la clé privée cryptée du premier client étant effectué automatiquement à intervalles réguliers.

7. Procédé selon l'une des revendications précédentes, comprenant en outre :
par le premier client, cryptage (410) de la clé privée du premier client avec un mot de passe, et communication au deuxième serveur de la clé privée du premier client cryptée avec le mot de passe ainsi qu'une valeur de hachage (415) générée à partir du mot de passe ; et
par le deuxième serveur, enregistrement (420) de la clé privée du premier client cryptée avec le mot de passe, ainsi qu'une valeur de hachage de la valeur de hachage communiquée.

8. Procédé selon la revendication 7, comprenant en outre :
par le premier client, communication (430) au deuxième serveur de la valeur de hachage du mot de passe ;
par le deuxième serveur, comparaison (440) d'une valeur de hachage de la valeur de hachage communiquée à la valeur de hachage enregistrée du premier client, et communication (450) au premier client de la clé privée du premier client cryptée avec le mot de passe ; et
par le premier client, décryptage (460) de la clé privée communiquée du premier client avec le mot de passe.

9. Procédé selon la revendication 7 ou 8, comprenant en outre :
par le premier client, communication (470) au deuxième serveur d'une demande de remplacement du mot de passe ;
par le deuxième serveur, communication (480) au premier serveur d'une demande de remplacement du mot de passe ;
par le premier serveur, génération (490) de la clé symétrique à partir de la clé privée du premier serveur et de la clé publique du premier client, génération (490) d'un mot de passe à usage unique, cryptage (491) de la clé symétrique avec le mot de passe à usage unique, génération (492) d'une valeur de hachage du mot de passe à usage unique, et communication (492, 493) de la clé symétrique cryptée et d'une valeur de hachage de la valeur de hachage du mot de passe à usage unique au deuxième serveur ainsi que du mot de passe à usage unique au premier client ;
par le premier client, communication (494) au deuxième serveur d'une demande d'authentification du premier client, la demande comprenant une valeur de hachage du mot de passe à usage unique ;
par le deuxième serveur, comparaison (495) de la valeur de hachage du premier serveur à une valeur de hachage de la valeur de hachage du mot de passe à usage unique communiquée par le premier client, et communication (496) au premier client de la clé privée du premier client, cryptée avec la clé symétrique, ainsi que de la clé symétrique, cryptée avec le mot de passe à usage unique ; et
par le premier client, décryptage (497) de la clé symétrique cryptée avec le mot de passe à usage unique, décryptage (497) de la clé privée cryptée du premier client avec la clé symétrique, cryptage (498) de la clé privée du premier client avec un nouveau mot de passe, et communication (498) au deuxième serveur de la clé privée du premier client cryptée avec le nouveau mot de passe et d'une valeur de hachage du nouveau mot de passe.

10. Procédé selon l'une des revendications précédentes, comprenant en outre :
par le premier client, communication (510) d'une demande d'authentification à un troisième serveur ;
par le troisième serveur, communication (520) d'un défi au premier client ;
par le premier client, communication (530) d'une réponse au défi au troisième serveur ;
par le troisième serveur, validation (540) de la réponse et communication (550) d'un jeton d'accès au premier client ;
par le premier client, communication (560) d'une demande d'accès au deuxième serveur, la demande d'accès contenant le jeton d'accès ; et
par le deuxième serveur, vérification (570) du jeton d'accès.

11. Procédé selon l'une des revendications 1 à 9, comprenant en outre :
par le premier client, communication (610) d'une demande d'accès au deuxième serveur ;
par le deuxième serveur, communication (620) d'un défi au premier client ;
par le premier client, communication (630) d'une réponse au défi au deuxième serveur ; et
par le deuxième serveur, validation (640) de la réponse à l'aide du défi.

12. Procédé selon la revendication 10 ou 11, comprenant en outre :
par le deuxième serveur, signature (710) d'un justificatif d'autorisation du premier client avec la clé privée du deuxième serveur, et communication (720) au premier client du justificatif d'autorisation signé et de la clé privée du client cryptée avec la clé symétrique ; par le premier client, communication (730) du justificatif d'autorisation signé au premier serveur ;
par le premier serveur, validation (740) du justificatif d'autorisation signé du premier client au moyen de la clé publique certifiée du deuxième serveur, génération (750) de la clé symétrique à partir de la clé privée du premier serveur et de la clé publique du premier client, et communication (750) de la clé symétrique au premier client ; et
par le premier client, décryptage (760) de la clé privée cryptée du premier client avec la clé symétrique.

13. Procédé selon la revendication 12, la signature (710) du justificatif d'autorisation du premier client comprenant le fait de pourvoir la signature du justificatif d'autorisation d'une ou plusieurs estampilles temporelles, et la validation (740) du justificatif d'autorisation signé étant interrompue lorsqu'une période définie par la ou les estampilles temporelles s'est écoulée.

14. Procédé selon l'une des revendications précédentes, comprenant en outre :
par le deuxième serveur, communication (810) à un deuxième client de la clé privée du premier client cryptée avec la clé symétrique ;
par le premier serveur, génération (820) la clé symétrique à partir de la clé privée du premier serveur et de la clé publique du premier client, et transmettre (820) la clé symétrique au deuxième client, et
par le deuxième client, décryptage (830) de la clé privée du premier client au moyen de la clé symétrique.

15. Système de sécurisation d'une clé privée d'un client, comprenant :
un client, un premier serveur et un deuxième serveur ;
le client étant conçu pour demander (110) une clé publique du premier serveur ;
le premier serveur étant conçu pour communiquer (120) au client la clé publique du premier serveur ;
le client étant en outre conçu pour générer (130) une clé symétrique à partir de la clé privée du client et de la clé publique du premier serveur, et pour crypter (140) la clé privée du client avec la clé symétrique, et pour communiquer (140) à un deuxième serveur la clé privée cryptée du client, le deuxième serveur étant conçu pour enregistrer (150) la clé privée cryptée du client.

16. Système selon la revendication 15, le client étant en outre conçu pour récupérer (210, 230) la clé symétrique auprès du premier serveur et la clé privée cryptée du client auprès du deuxième serveur, ainsi que pour décrypter (250) la clé privée cryptée du client au moyen de la clé symétrique.

17. Support lisible par ordinateur sur lequel sont enregistrées des instructions qui, lorsqu'elles sont exécutées par un ou plusieurs processeurs, mettent en œuvre le procédé selon l'une des revendications 1 à 14.
